Europäisches Patentamt

European Patent Office

Office européen des brevets

(11) Publication number: **0 314 788**
**A1**

(12) # EUROPEAN PATENT APPLICATION

published in accordance with Art. 158(3) EPC

(21) Application number: **87903398.3**

(22) Date of filing: **13.05.87**

Data of the international application taken as a basis:

(86) International application number:
**PCT/JP87/00301**

(87) International publication number:
**WO88/08861 (17.11.88 88/25)**

(51) Int. Cl.³: **C 08 J 9/22**

(43) Date of publication of application:
**10.05.89 Bulletin 89/19**

(84) Designated Contracting States:
**AT BE CH DE FR GB IT LI LU NL SE**

(71) Applicant: **KANEGAFUCHI KAGAKU KOGYO KABUSHIKI KAISHA**
**2-4 Nakanoshima 3-chome**
**Kita-ku Osaka-shi Osaka 530(JP)**

(72) Inventor: **NAKAMURA, Kyoichi**
**1-5-102, Shittechuo 5-chome**
**Kamisu-cho, Kashima-gun Ibaraki 314-02(JP)**

(74) Representative: **Türk, Gille, Hrabal**
*Bruckner Strasse 20*
**D-4000 Düsseldorf 13(DE)**

(54) **PREEXPANDED POLYOLEFIN RESIN PARTICLES AND PROCESS FOR THEIR PREPARATION.**

(57) A preexpanded polyolefin resin particle which comprises a base resin prepared by incorporating 0.1 to 10 parts by weight of a polymer having carboxyl groups in 100 parts by weight of a polyolefin resin and which has a cell diameter of 200 to 500 $\mu$m. Moldings formed by the expansion molding of the preexpanded particles in a mold show a lower shrinkage rate and a smaller deformation, thus showing a good and attractive appearance and being producible in an enhanced yield.

- 1 -

DESCRIPTION

PRE-EXPANDED PARTICLES OF POLYOLEFIN RESIN
AND PROCESS FOR PREPARING THE SAME

TECHNICAL FIELD .

The present invention relates to pre-expanded particles of a polyolefin resin and a process for preparing the same. More particularly, the invention relates to pre-expanded particles of a polyolefin resin having excellent expansion moldability in a mold, that a resin in which 0.1 to 10 parts by weight of a polymer containing carboxyl group is contained in 100 parts by weight of a polyolefin resin is used as a base material, and the cell diameter is uniform and is from 200 to 500 µm; and a process for preparing the same.

BACKGROUND ART

When a cell diameter of pre-expanded particles of a polyolefin resin used in foaming in a mold is not more than 200 µm, there are defects that the foams foamed in a mold become large in shrinkage and their shapes are strained (generally known as "shrinkage or depression" or "camber" in the art). Accordingly, the foams are lowered in value of commodities and the producing technique of the foams becomes worse.

Then, as a result of repeating the earnest studies in view of the above-mentioned circumstance, the present inventor has been found that when a specific polymer is contained in a polyolefin resin to obtain the pre-expanded particules having the cell diameter of 200 to 500 µm, the above-mentioned problems after foaming in a mold can be solved, and has accomplished the present invention.

DISCLOSURE OF THE INVENTION

That is, the present invention relates to pre-expanded particles of a polyolefin resin

characterized in that a resin in which 0.1 to 10 parts by weight of a polymer containing carboxyl group is contained in 100 parts by weight of a polyolefin resin is used as a base material resin and the cell diameter is from 200 to 500 μm, and a process for preparing the same.

BRIEF DESCRIPTION OF THE DRAWING

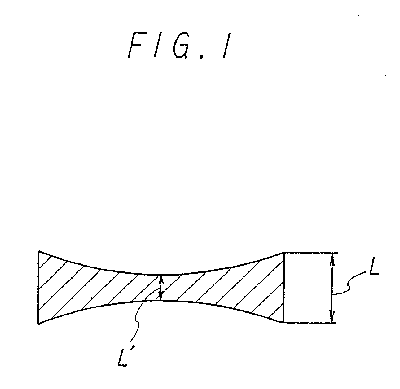

Fig. 1 shows a cross-sectional shape of a molded article used for measuring a strain of shape of a molded article.

When the pre-expanded particles of the present invention wherein the resin in which 0.1 to 10 parts (parts by weight, hereinafter the same) of the polymer containing carboxyl group is contained in 100 parts of the polyolefin resin is used as the base material and the cell diameter is uniform and is from 200 to 500 μm are used in foaming in a mold, the above-mentioned problems after foaming in a mold can be solved.

As the polyolefin resins used in the present invention, there are exemplified, for instance, polypropylene resins such as ethylene-propylene random copolymer, ethylene-propylene-butene random terpolymer, ethylene-propylene block copolymer and homopolypropylene; polyethylene resins such as a low density polyethylene, a medium density polyethylene, a high density polyethylene, a linear low density polyethylene, ethylene-vinyl acetate copolymer and ethylene-methyl methacrylate copolymer; poly(butene-1), polypentene, and the like. These polymers may be used alone as usual or in admixture thereof. Also, the polyolefin resins may be used in the state of non-crosslinking, and the resins crosslinked by a peroxide or radiation may be used.

As the polymer containing carboxyl group used in the present invention, there are exemplified, for instance, ethylene-acrylic acid-maleic anhydride terpolymer, an ionomer resin which is an ethylene-methacrylic acid copolymer intermolecularly crosslinked with a metal ion, ethylene-acrylic acid copolymer, ethylene-methacrylic acid copolymer, and the like. These polymers are usually used alone but may be used in admixture thereof. Particularly, among the polymers containing carboxyl group, the ethylene-acrylic acid-maleic anhydride terpolymer and the ionomer resin can be preferably used.

The amount used of the above-mentioned polymer containing carboxy' group is from 0.1 to 10 parts based on 100 parts of the polyolefin resin. When the amount used of the polymer containing carboxyl group is less than 0.1 part, it is difficult to obtain the pre-expanded particles of the polyolefin resin having the cell diameter of not less than 200 µm, and when the amount is more than 10 parts, the cell diameter does not become so larger than about 500 µm and the properties of the polyolefin resin are impaired, which is not preferable. Particularly, it is preferable that the amount used of the polymer containing carboxyl group is from 0.3 to 5 parts from the effect of making a cell diameter large and the economy, and more preferably, the amount is from 0.5 to 3 parts.

As a method for containing the polymer containing carboxyl group into the polyolefin resin, a containing method by graft polymerization is applicable. Usually, they are used as the mixture thereof.

Usually, the polyolefin resin and the polymer containing carboxyl group are melted and mixed by using an extruder, a kneader, a Banbury mixer, a roll, or the like, and are molded into particles having a desired shape easily utilizable for pre-expansion, such as a cylinder, a cylindroid, a sphere, a cube or a rectangular parallelepiped.

There has hitherto been known a process wherein thermoplastic resin particles containing a volatile blowing agent are dispersed into water with stirring in a pressure vessel such as an autoclave, and it is released into a low pressure zone at a high temperature under high pressure to pre-expand the thermoplastic resin particles, and there are cited, for instance, methods described in DE-OS 2,107,683 and Japanese Examined Patent Publication No. 1344/1981. However, when pre-expansion is conducted according to these processes, the obtained pre-expanded particles are extremely ununiform in the cell diameter and it is difficult to obtain the pre-expanded particles having the cell diameter of not less than 200 µm. When, by using the thus pre-expanded particles, the foaming in a mold is conducted, only foams having the inferior appearance and the poor value of commodities can be obtained.

However, in a process for pre-expanding thermoplastic resin particles which comprises dispersing thermoplastic resin particles containing a volatile blowing agent into water, heating them under pressure, and releasing the aqueous dispersion into a low pressure zone, when the base material resin in which 0.1 to 10 parts of the polymer containing carboxyl group is contained in 100 parts of the polyolefin resin is used as the thermoplastic resin, the pre-expanded particles of the polyolefin resin having the uniform cell diameter of 200 to 500 µm can be easily obtained.

When the amount of the polymer containing carboxyl group is less than 0.1 part, it is difficult that the cell diameter becomes not less than 200 µm, and on the other hand, when the amount is more than 10 parts, though the cell diameter becomes not less than 200 µm, the dimensional shrinkage of the foams and the strain of the shape of the foams become large, which is not preferable.

As the volatile blowing agent used in the present invention, there are exemplified, for instance, aliphatic hydrocarbons such as propane, butane, pentane and hexane; alicyclic hydrocarbons such as cyclopentane and cyclobutane; halogenated hydrocarbons such as trichloromonofluoromethane, dichlorodifluoromethane,

- 5 -

dichlorotetrafluoroethane, trichlorotrifluoroethane, methyl chloride, methylene chloride and ethyl chloride; and the like. The blowing agents may be used alone or in admixture thereof. The amount used of the blowing agent is not particularly limited and is suitably used due to the desired expansion ratios of the pre-expanded particles of the polyolefin resin. Usually, the amount is from 5 to 50 parts based on 100 parts of the base material resin (the resin in which 0.1 to 10 parts of the polymer containing carboxyl group is contained in 100 parts of the polyolefin resin).

In the present invention, the volatile blowing agent is contained into the polyolefin resin particles in the pressure vessel, and then the particles are dispersed into water with stirring. At that time, there can be used calcium tertiary phosphate, basic magnesium carbonate, basic zinc carbonate, calcium carbonate, and the like, as a dispersing agent and a slight amount of a surface active agent such as sodium dodecylbenzenesulfonate, sodium n-paraffinicsulfonate or sodium α-olefinsulfonate can be used.

As other processes for preparing the pre-expanded particles of the present invention, a process in which after impregnating the base material resin particles used in the present invention with the volatile blowing agent, the particles are heated with steam (for example, processes disclosed in Japanese Examined Patent Publication No. 34391/1973 or Japanese Unexamined Patent Publication No. 65734/1983) is applicable.

The pre-expanded particles of the polyolefin resin obtained according to the present invention have usually a ratio of closed cells of not less than 80 %. If necessary, the pre-expanded particles are further heated under pressure for a prescribed period of time in the pressure vessel to impregnate with air, and then the pre-expanded particles are filled in a mold for molding and foamed by heating with steam to give a foamed article having the same shape as the mold.

- 6 -

The thus obtained foamed articles are small in dimensional shrinkage and distortion of the shape, and accordingly are great in value of commodities.

BEST MODE FOR CARRYING OUT THE INVENTION

Then, the present invention is explained by means of Examples and Comparative Examples, but the present invention is not limited to Examples.

Examples 1 to 7 and Comparative Examples 1 to 4

A pressure vessel was charged with 100 parts of pellets of a base material resin comprising a mixture of 100 parts of an ethylene-propylene random copolymer (Noblen made by Sumitomo Kagaku Kogyo Kabushiki Kaisha, ethylene content: 4.5 % by weight) and an ethylene-acrylic acid-maleic anhydride terpolymer in an amount shown in Table 1, 30 parts of dichlorodifluoromethane, 0.5 part of basic calcium tertiary phosphate powder as a dispersing agent, 0.006 part of sodium n-paraffinicsulfonate and 300 parts of water, and the mixture was heated to 136°C. At that time, the inner pressure was about 26 $kg/cm^2G$. Then, the aqueous dispersion was released into the atmospheric pressure by opening a valve provided at a lower part of the pressure vessel to pre-expand while the inner pressure of the vessel was maintained at 26 to 26.5 $kg/cm^2G$ by supplying dichlorodifluoromethane to the vessel. The pre-expanded particles having expansion ratios of about 30 were obtained.

After the obtained pre-expanded particles were impregnated with air at 80°C for 2.0 hours under a pressure of 8.5 $kg/cm^2G$ (in air) to adjust the inner pressure of the particles to about 2.0 to 2.5 atm., they were filled in a plank mold having dimensions of 290 mm x 270 mm x 50 mm and heated at a steam pressure of about 2.0 $kg/cm^2G$ to give a molded article.

As the properties of the molded article, the cell diameter, the uniformity of the cell diameter, the

- 7 -

dimensional shrinkage of the molded article and the strain of shape of the molded article were measured according to the following manners. The results are shown in Table 1.

(Measurement of the cell diameter)

There are randomly picked up 30 pieces of pre-expanded particles from the obtained pre-expanded particles and the cell diameters are measured according to JIS K 6402. The average diameter (d) of the cells is calculated therefrom.

(Uniformity of cell diameter)

It is estimated by a percentage of the average cell diameter (d) to the standard deviation ($\sigma$) showing the scatter of cell diameters (hereinafter referred to as "U").

$$U = (\sigma/d) \times 100 \ (\%)$$

The smaller the value of U, the more uniform the cell diameter.

$\bigcirc$ : The value of U is less than 35 %

$\triangle$ : The value of U is from 35 to 45 %

$\times$ : The value of U is more than 45 %

(Dimensional shrinkage of molded article)

The shrinkage of the molded article is found from the measured values of the dimensions of the molded article and the dimensions of the mold.

$\bigcirc$ : less than 3 %

$\triangle$ : from 3 to 5 %

$\times$ : more than 5 %

(Strain of shape of molded article)

The thicknesses of the molded article shown in the cross-senctional shape (Fig. 1) are measured and the strain of shape of the molded article is estimated from the percentage of the maximum thickness (L) to the minimum thickness (L'): $S = (1 - \frac{L'}{L}) \times 100$.

○: S is less than 3 %
△: S is from 3 to 5 %
✕: S is more than 5 %

Table 1

| Ex. No. | Ethylene-acrylic acid-maleic anhydride terpolymer (parts) | Average cell diameter ($\mu$m) | Uniformity of cells | Dimensional shrinkage | Strain of shape of molded article |
|---------|---------|---------|---------|---------|---------|
| 1 | 0.1 | 240 | ◯ | ◯ | ◯ |
| 2 | 0.3 | 290 | ◯ | ◯ | ◯ |
| 3 | 0.5 | 352 | ◯ | ◯ | ◯ |
| 4 | 1.0 | 415 | ◯ | ◯ | ◯ |
| 5 | 3.0 | 421 | ◯ | ◯ | ◯ |
| 6 | 5.0 | 420 | ◯ | ◯ | ◯ |
| 7 | 10.0 | 433 | ◯ | ◯ | ◯ |
| Com.Ex 1 | 0 | 171 | ✕ | ✕ | ✕ |
| 2 | 0.07 | 185 | △ | △ | ✕ |
| 3 | 15.0 | 421 | ◯ | △ | ✕ |
| 4 | 20.0 | 410 | ◯ | ✕ | ✕ |

- 10 -

All of the molded articles obtained in Examples 1 to 7 were small in dimensional shrinkage and were not strained in their shapes. In Comparative Example 1 wherein ethylene-acrylic acid-maleic anhydride terpolymer was not mixed, and the pre-expanded particles were poor in uniformity of the cell and had the average diameter of not more than 200 μm. Therefore, the obtained molded article was large in dimensional shrinkage and strain of shape.

In Comparative Examples 3 and 4, the pre-expanded particles were large and uniform in cell diameter. However, though the amount of the ethylene-acrylic acid-maleic anhydride was much, the cell diameters were almost the same as those of the pre-expanded particles obtained in Examples 4 to 7, and the effect was not further improved by further adding the ethylene-acrylic acid-maleic anhydride. Moreover, the molded articles were poor in both dimensional shrinkage and strain of shape.

Examples 8 to 14 and Comparative Examples 5 to 7

Pre-expanded particles were prepared in the same manner as in Example 1 except that an ionomer resin being ethylene-methacrylic acid copolymer intermolecularly crosslinked with a metal ion (HI-MILAN 1706 made by Mitsui Polychemical Kabushiki Kaisha) was used in each amount shown in Table 2. Then, molded articles in a mold were produced in the same manner as in Example 1. The properties of the obtained molded articles were measured in the same manner as in Example 1. The results are shown in Table 2.

| Ex. No. | Amount used of the ionomer, HI-MILAN 1706 (parts) | Average cell diameter (μm) | Uniformity of cells | Dimensional shrinkage | Strain of shape of molded article |
|---|---|---|---|---|---|
| 8 | 0.1 | 231 | ◯ | ◯ | ◯ |
| 9 | 0.3 | 275 | ◯ | ◯ | ◯ |
| 10 | 0.5 | 324 | ◯ | ◯ | ◯ |
| 11 | 1.0 | 388 | ◯ | ◯ | ◯ |
| 12 | 3.0 | 406 | ◯ | ◯ | ◯ |
| 13 | 5.0 | 415 | ◯ | ◯ | ◯ |
| 14 | 10.0 | 422 | ◯ | ◯ | ◯ |
| Com.Ex. 5 | 0.07 | 191 | △ | △ | ✕ |
| 6 | 15.0 | 427 | ◯ | △ | ✕ |
| 7 | 20.0 | 413 | ◯ | ✕ | ✕ |

- 11 -

- 12 -

All of the molded articles obtained in Examples 8 to 14 were small in dimensional shrinkage and were not strained in their shapes. In Comparative Example 5, the amount used of the ionomer resin was small, the average cell diameter was not more than 200 μm and the estimation of the molded article was inferior. As to Comparative Examples 6 and 7, though the amount of the ionomer resin was much, the cell diameters did not become large compar·d to Examples 12 to 14 and the obtained molded articles were not preferably estimated.

From the results of Comparative Examples 2 to 7, the polymer containing carboxyl group has the upper limit and the lower limit in amount used. Particularly, when the amount used is more than 10 parts, the characters of the polyolefin resin are lost, therefore the estimation of the molded article becomes worse though they are preferable in average cell diameter and uniformity of cells.

According to the present invention, there can be obtained the pre-expanded particles of the polyolefin resin, having the uniform cell diameter of 200 to 500 μm, and the articles foamed in a mold from the pre-expanded particles are small in shrinkage and strain. Therefore, the molded articles are excellent in the appearance, and moreover, the production yield of the molded articles is increased. Accordingly, they are suitably used for structural members such as impact absorbers for cars, and heat insulting building materials which require excellent dimensional precision, and also, are utilizable for shock absorbing wrapping materials, and the like.

0314788

CLAIMS

1. A pre-expanded particle of a polyolefin resin, characterized in that a resin in which 0.1 to 10 parts by weight of a polymer containing carboxyl group is contained in 100 parts by weight of a polyolefin resin is used as a base material resin and the cell diameter is from 200 to 500 μm.

2. The pre-expanded particle of the polyolefin resin of Claim 1, wherein said polyolefin resin is a polypropylene resin.

3. The pre-expanded particle of the polyolefin resin of Claim 2, wherein said polypropylene resin is an ethylene-propylene random copolymer.

4. The pre-expanded particle of the polyolefin resin of Claim 1, wherein said polymer containing carboxyl group is an ethylene-acrylic acid-maleic anhydride terpolymer.

5. The pre-expanded particle of the polyolefin resin of Claim 1, wherein said polymer containing carboxyl group is an ionomer resin which is an ethylene-methacrylic acid copolymer intermolecularly crosslinked with a metal ion.

6. The pre-expanded particle of the polyolefin resin of Claim 1, wherein 0.3 to 5 parts by weight of said polymer containing carboxyl group is contained in 100 parts by weight of said polyolefin resin.

7. In a preparing process comprising dispersing thermoplastic resin particles containing a volatile blowing agent into water with stirring in a pressure vessel, heating under pressure, and releasing the aqueous dispersion into a low pressure zone to pre-expand the thermoplastic resin particles, a process for preparing pre-expanded particles of a polyolefin resin, characterized in that a base material resin in which 0.1 to 10 parts by weight of a polymer containing carboxyl group is contained in 100 parts by weight of a polyolefin resin is used as a thermoplastic resin.

1/1

FIG. 1

# INTERNATIONAL SEARCH REPORT

0314788

International Application No   PCT/JP87/00301

## I. CLASSIFICATION OF SUBJECT MATTER (if several classification symbols apply, indicate all) 3

According to International Patent Classification (IPC) or to both National Classification and IPC

Int.Cl⁴      C08J9/22

## II. FIELDS SEARCHED

| Minimum Documentation Searched 4 | |
|---|---|
| Classification System | Classification Symbols |
| IPC | C08J9/04 ‒ 9/22 |

Documentation Searched other than Minimum Documentation
to the Extent that such Documents are Included in the Fields Searched 5

## III. DOCUMENTS CONSIDERED TO BE RELEVANT 14

| Category * | Citation of Document, 16 with indication, where appropriate, of the relevant passages 17 | Relevant to Claim No. 18 |
|---|---|---|
| A | JP, A, 60-168638 (Japan Styrene Paper Co., Ltd.) 2 September 1985 (02. 09. 85) (Family: none) | 1 |
| A | JP, A, 52-66880 (Asahi-Dow Limited) 2 June 1977 (02. 06. 77) (Family: none) | 1 |
| A | JP, A, 52-4566 (Asahi-Dow Limited) 13 January 1977 (13. 01. 77) (Family: none) | 1 |
| A | JP, A, 49-74755 (The Dow Chemical Company) 18 July 1974 (18. 07. 74) (Family: none) | 1 |
| A | JP, B, 58-34501 (Asahi-Dow Limited) 27 July 1983 (27. 07. 83) & US, A, 4,102,829 | 1 |
| A | JP, B, 56-1344 (Japan Styrene Paper Co., | 7 |

* Special categories of cited documents: 15

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search 3 | Date of Mailing of this International Search Report 2 |
|---|---|
| July 30, 1987 (30. 07. 87) | August 17, 1987 (17. 08. 87) |
| International Searching Authority 1 | Signature of Authorized Officer 20 |
| Japanese Patent Office | |

Form PCT/ISA/210 (second sheet) (October 1977)

| FURTHER INFORMATION CONTINUED FROM THE SECOND SHEET | |
|---|---|
| Ltd.)<br>13 January 1981 (13. 01. 81)<br>(Family: none) | |

**V.☐ OBSERVATIONS WHERE CERTAIN CLAIMS WERE FOUND UNSEARCHABLE**[10]

This international search report has not been established in respect of certain claims under Article 17(2) (a) for the following reasons:

1.☐ Claim numbers_____ because they relate to subject matter [12] not required to be searched by this Authority, namely:

2.☐ Claim numbers_____ because they relate to parts of the international application that do not comply with the prescribed requirements to such an extent that no meaningful international search can be carried out [13], specifically:

**VI.☐ OBSERVATIONS WHERE UNITY OF INVENTION IS LACKING**[11]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.